# FASCICULE DE BREVET EUROPEEN

(11) **EP 1 499 522 B1**
(45) Date de publication et mention de la délivrance du brevet: **09.12.2009**
(21) Numéro de dépôt: 03730182.7
(22) Date de dépôt: 15.04.2003
(51) Int. Cl.: B60R 25/00, B60R 25/04, B60R 25/10

(54) **SYSTEME DE COMMANDE DE L ACCES ET/OU DU DEMARRAGE D UN VEHICULE AUTOMOBILE AVEC MOYENS D ALERTE POUR L UTILISA TEUR**
SYSTEM ZUR STEUERUNG DES ZUGANGS ZU EINEM UND/ODER DES STARTS EINES KRAFTFAHRZEUGS MIT BENUTZERWARNUNGSMITTEL
SYSTEM OF CONTROLLING ACCESS TO AND/OR THE START UP OF A MOTOR VEHICLE, COMPRISING USER ALERT MEANS

(30) Priorité: 30.04.2002 FR 0205593
(43) Date de publication de la demande: 26.01.2005
(73) Titulaire: VALEO SECURITE HABITACLE, 94000 Créteil (FR)
(72) Inventeur: GARNAULT, Joël, F-95110 Sannois (FR); CARESCHE, François, F-91800 Brunoy (FR); LECONTE, Eric, F-94450 Limeil-Brévannes (FR); MOTZ, Joël, F-77000 Melun (FR)
(74) Mandataire: Rosolen-Delarue, Katell
(86) Numéro de dépôt international: PCT/EP2003/050106
(87) Numéro de publication internationale: WO 2003/093074

(56) Documents cités:
- EP-A- 0 521 547
- EP-A- 0 955 217
- WO-A-97/36771
- DE-A- 19 605 201
- US-A- 4 218 763
- US-A- 5 157 375
- US-B1- 6 317 034

## Description

La présente invention concerne les systèmes utilisés pour permettre et interdire l'accès à un véhicule automobile et/ou pour permettre le démarrage d'un tel véhicule sur la base de la transmission de signaux électromagnétiques. L'invention est plus précisément relative aux systèmes de sécurisation d'accès de type télécommande RF ou mains-libres, et aux systèmes de sécurisation de démarrage de type mains-libres.

On connaît aujourd'hui des systèmes dits mains-libres comprenant un dispositif d'identification situé à bord du véhicule automobile, adapté pour l'échange de signaux électromagnétiques, dans une ou plusieurs zones prédéfinies, avec un identifiant portatif se présentant par exemple sous forme de clé ou de badge au format d'une carte de crédit.

Certains de ces systèmes sont utilisés pour sécuriser l'accès au véhicule automobile. Plus précisément, pour permettre l'accès au véhicule, il est connu de procéder à une décondamnation automatique de la serrure d'au moins un ouvrant lorsque l'identifiant porté par l'utilisateur a été authentifié par le dispositif d'identification situé sur le véhicule suite à l'échange de signaux électromagnétiques. Cet échange de signaux électromagnétiques peut être initié suite à l'actionnement par l'utilisateur d'un commutateur situé au voisinage de l'ouvrant, par exemple au niveau de la poignée de l'ouvrant. Différents types de commutateurs sont connus qui vont du bouton mécanique fonctionnant comme un interrupteur, aux capteurs de type tactile ou encore optique qui détectent la coupure d'un faisceau optique par la main de l'utilisateur. En variante, il est connu également d'utiliser un capteur qui détecte la présence d'un utilisateur au voisinage de l'ouvrant, de manière à déclencher au plus tôt la phase d'authentification.

Quelle que soit la façon dont l'échange de signaux entre le dispositif d'identification et l'identifiant portatif est initié, cet échange consiste généralement en un signal d'interrogation émis par le dispositif d'identification, auquel l'identifiant va répondre avec un signal de réponse contenant des données d'identification. Le dispositif d'identification pourra par la suite comparer ces données d'identification avec ses propres données, et autoriser ou non la décondamnation de l'ouvrant en fonction du résultat de la comparaison.

Dans certains systèmes mains-libres connus, le signal d'interrogation est émis en basse fréquence, typiquement 125 KHz. Dans d'autres systèmes, ce signal d'interrogation est émis en radiofréquence, typiquement de l'ordre de 433 MHz. Dans les deux types de systèmes, le signal de réponse est toujours émis en radiofréquence, généralement également à 433 MHz.

Le document WO97/36771 divulgue un système de commande permettant d'interdire l'accès à un véhicule lors d'un vol de ce véhicule. Un signal d'alarme est envoyé depuis le véhicule vers une station de base et un site central qui le relayent vers un dispositif portatif utilisé par l'utilisateur du véhicule de manière à le prévenir du vol de son véhicule.

Lorsque l'utilisateur quitte son véhicule, il est connu d'initier également un échange de signaux électromagnétiques, par exemple sur détection de l'ouverture puis fermeture de l'ouvrant. On peut alors effectuer une condamnation automatique de l'ensemble des ouvrants dès lors que le dispositif d'identification ne reçoit plus de signal de réponse, traduisant le fait que l'utilisateur s'éloigne de son véhicule.

Il est également connu d'utiliser un système mains-libres pour sécuriser le démarrage d'un véhicule automobile. Dans certains cas, le dispositif d'identification peut comprendre un lecteur de badge dans lequel l'identifiant portatif peut être inséré. Suite à une action volontaire du conducteur, par exemple par appui sur un bouton de démarrage, l'échange de signaux entre le lecteur et l'identifiant est réalisé afin de permettre une authentification, et autoriser ou non le démarrage. L'échange de signaux est effectué ici en basse fréquence (lecteur en mode dit transpondeur). En variante, on peut également prévoir de ne pas avoir de lecteur de badge, et que l'échange de signaux entre le dispositif d'identification et l'identifiant portatif s'effectue en radiofréquence.

Un tel système mains-libres de sécurisation du démarrage peut être utilisé conjointement avec le système de sécurisation de l'accès, l'identifiant portatif étant de préférence le même pour les deux fonctionnalités.

En variante, on peut prévoir que le système mains-libres n'est utilisé qu'à la sécurisation du démarrage, la sécurisation de l'accès au véhicule étant effectuée quant à elle par une télécommande envoyant des signaux RF à un récepteur RF situé sur le véhicule de façon à commander la condamnation ou la décondamnation des ouvrants. On prévoit alors de préférence que la télécommande fasse partie intégrante de l'identifiant portatif.

Un problème auquel ce type de systèmes utilisant des signaux radiofréquences peut être confronté est celui de la non détection des signaux émis due à la présence de signaux perturbateurs dans une zone donnée dans lequel le véhicule automobile est à l'arrêt. De tels signaux peuvent en effet empêcher notamment que :
- les signaux RF issus d'une télécommande pour commander la fermeture ou l'ouverture d'au moins un ouvrant du véhicule soient reconnus par le récepteur RF situé sur le véhicule ;
- les signaux RF envoyés par un identifiant à un dispositif d'identification pour permettre son authentification et autoriser ou non l'accès et/ou le démarrage du véhicule automobile soient reconnus par le dispositif d'identification ;
- les signaux RF envoyés par un identifiant à un dispositif d'identification lorsque l'utilisateur s'éloigne du véhicule soient reconnus par le dispositif d'identification.

Ainsi, l'utilisateur peut avoir l'impression que sa télécommande, malgré des actions répétées, ou son système mains-libres ne fonctionne pas alors que le problème est en fait lié à une zone géographique donnée dans laquelle des signaux perturbateurs sont générés, volontairement ou non, de façon continue ou complètement aléatoirement.

Ces signaux perturbateurs peuvent être par exemple émis par des émetteurs de télévision qui peuvent générer des signaux dont les harmoniques correspondraient à la fréquence utilisée dans les systèmes mains-libres ou télécommandes, typiquement 433 MHz.

Bien entendu, tous les systèmes de sécurisation d'accès et/ou de démarrage sont toujours doublés d'une solution de-secours de façon à permettre à l'utilisateur, en cas de défaillance du système, de pouvoir néanmoins ouvrir et/ou démarrer son véhicule. Cependant, ces solutions de secours ont généralement pour but de pallier au problème d'autonomie du dispositif portatif, généralement alimenté par une pile, ou de l'équipement relié à la batterie du véhicule.

Ainsi, l'utilisateur pourra être agacé à l'utilisation et insister sur l'utilisation de sa télécommande ou de son badge avant de penser à utiliser la solution de secours.

Plus grave encore, dans le cas de la fonction de verrouillage automatique des ouvrants sur l'éloignement de l'utilisateur, dans laquelle le verrouillage ne s'effectue que lorsque l'utilisateur est à plus de cinq mètres de son véhicule, l'utilisateur, au mieux, s'apercevra du mauvais fonctionnement, et reviendra à son véhicule, ou au pire, quittera le véhicule en étant convaincu, à tort, qu'il s'est verrouillé automatiquement.

Une première solution pourrait consister à effectuer, au niveau des signaux radiofréquences reçus, un traitement de signal visant à filtrer les signaux perturbateurs pour ne retenir que les signaux utiles, inhérents au système de commande. Un tel traitement s'avère cependant complexe, et par suite assez coûteux à mettre en oeuvre.

La présente invention a pour but de proposer une solution particulièrement simple et économique au problème précité qui consiste, non pas à s'affranchir des perturbations, mais seulement à détecter un environnement perturbateur.

Plus précisément, l'invention a pour objet un système de commande de l'accès et/ou du démarrage d'un véhicule automobile du type comportant un dispositif portatif adapté pour communiquer avec un équipement situé au niveau du véhicule automobile par des signaux radiofréquences en vue d'autoriser ou empêcher l'accès et/ou le démarrage, le véhicule automobile étant en outre muni d'un moyen de secours pour autoriser ou empêcher l'accès et/ou le démarrage à la place dudit système de commande, le système étant caractérisé en ce qu'il comporte en outre des moyens de détection de signaux radiofréquences perturbateurs émis indépendamment du système de commande, ainsi que des moyens d'alerte de l'utilisateur commandés après détection des signaux radiofréquences perturbateurs de manière à indiquer à l'utilisateur qu'il doit utiliser le moyen de secours du véhicule automobile pour autoriser ou empêcher l'accès et/ou le démarrage.

Dans un premier mode de réalisation de l'invention, les moyens d'alerte permettent la génération d'un signal visuel, tel qu'un signal lumineux d'une diode électroluminescente, ou l'affichage d'un message sur un écran à cristaux liquides.

En variante, les moyens d'alerte sont sonores.

Avantageusement, les moyens de détection de signaux radiofréquences perturbateurs sont déclenchés suite à la réception d'une indication que le véhicule automobile est passé d'un état-de fonctionnement à un état d'arrêt.

D'autres caractéristiques et avantages de la présente invention apparaîtront au vu de la description suivante faite en référence aux figures annexées dans lesquelles :
- la figure 1 illustre schématiquement les composantes principales d'un système de commande équipant un véhicule automobile ;
- la figure 2 illustre sous forme de synoptique simplifié des moyens constitutifs de l'invention, selon un premier mode de réalisation possible ;
- la figure 3 illustre sous forme de synoptique simplifié des moyens constitutifs de l'invention, selon un deuxième mode de réalisation possible ;
- la figure 4 montre un exemple de fonctionnement d'un système de commande avec alerte de l'utilisateur selon l'invention.

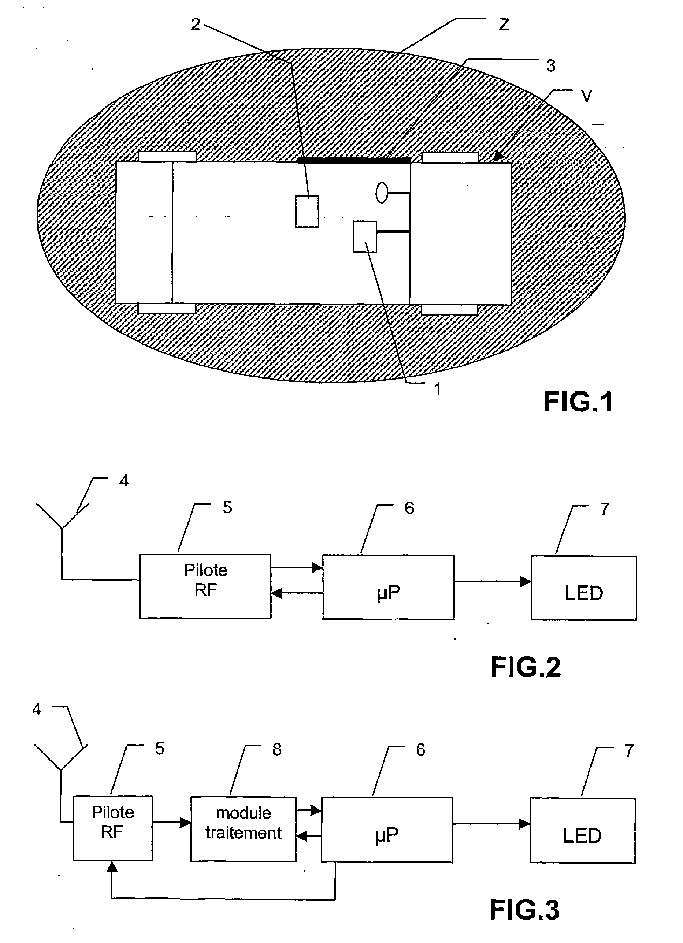

Sur la figure 1, on a représenté schématiquement un véhicule automobile V équipé d'un système de commande de l'accès et/ou du démarrage comprenant un équipement 1 monté à bord du véhicule et adapté pour l'échange de signaux électromagnétiques avec un dispositif portatif 2 dans une zone Z prédéfinie.

Le système de commande est par exemple un système de télécommande, permettant uniquement de sécuriser l'accès au véhicule automobile (condamnation et décondamnation des ouvrants 3 du véhicule), le dispositif portatif 2 étant alors une télécommande générant, sur action de l'utilisateur (du type appui sur un bouton) un signal radiofréquence, et l'équipement 1 sur le véhicule comprenant un récepteur radiofréquence (non représenté), comprenant notamment une antenne de réception radiofréquence.

En variante, le système de commande est un système de type mains-libres permettant de sécuriser l'accès et/ou le démarrage du véhicule V. Dans ce cas, le dispositif portatif 2 est un identifiant et l'équipement 1 à bord du véhicule est un dispositif d'identification chargé d'authentifier l'identifiant préalablement à une quelconque autorisation. Plus précisément dans ce cas, l'identifiant génère, sur réception d'un signal d'interrogation émis par l'équipement 1, au moins un signal de réponse radiofréquence contenant un code d'identification. La communication du dispositif d'identification 1 vers le badge 2 s'effectue soit à basses fréquences, typiquement à 125 KHz, soit également en radiofréquences.

Dans tous les cas, le système de commande concerné par l'invention contient, au moins dans une direction, l'émission de signaux radiofréquences, la fréquence généralement utilisée étant typiquement égale à 433 MHz (on utilise également les fréquences 315/868 MHz).

Le véhicule automobile est également équipé, comme cela est connu, d'un moyen de secours (non représentés) pour autoriser ou empêcher l'accès et /ou le démarrage du véhicule automobile en lieu et place du système de commande, lorsque ce dernier est défaillant,- c'est-à-dire typiquement en cas de problème de pile du dispositif portatif. Un tel moyen de secours ne fait pas partie de l'invention en tant que tel, et ne sera donc pas décrit dans le détail. Un moyen de secours connu est par exemple l'emploi d'un insert de clé adapté- pour être inséré dans un verrou commandant mécaniquement la serrure d'au moins un ouvrant. Avantageusement, l'insert fait partie du dispositif portatif. On se reportera par exemple à la demande de brevet de la Demanderesse N° EP 0 987 389 décrivant un identifiant du format d'une carte de crédit équipé d'un tel insert.

Comme cela a été mentionné dans l'introduction, ce type de système de commande peut voir son fonctionnement troublé si le véhicule est stationné dans une zone géographique dans laquelle des signaux radiofréquences perturbateurs, indépendants du système, sont émis, que cela soit de façon involontaire ou non. Plus précisément, la présence de tels signaux perturbateurs peut être responsable d'une non détection par l'équipement 1 situé sur le véhicule de signaux radiofréquences utiles, à savoir notamment d'u signal de commande émis d'une télécommande, ou d'un signal de réponse contenant un code d'identification dans le cas d'un système mains-libres.

Pour résoudre ce problème, le système selon la présente invention comporte des moyens de détection des signaux perturbateurs susceptibles d'être présents dans la zone de fonctionnement du système de commande, ainsi que des moyens d'alerte à destination de l'utilisateur lorsque de tels signaux perturbateurs ont été détectés. Ainsi, l'utilisateur est averti du fait que son véhicule est stationné dans une zone géographique dans laquelle son système de commande risque de ne pas fonctionner, et qu'il est préférable d'utiliser le moyen de secours pour commander la condamnation/décondamnation des ouvrants du véhicule, et/ou autoriser son démarrage.

Les moyens d'alerte peuvent consister en tout dispositif permettant la génération d'un signal visuel, tel qu'un signal lumineux généré par une diode électroluminescente, ou encore un écran à cristaux liquides sur lequel un message spécifique peut s'inscrire. En variante ou en combinaison, il est possible d'utiliser une alerte sonore, voire une vibration sonore.

En référence à la figure 2, on décrit à présent un premier mode de réalisation selon l'invention. Les signaux radiofréquences perturbateurs constituent en fait des signaux de bruit qu'il est possible de détecter en utilisant le contrôle automatique de gain utilisé classiquement dans un récepteur radiofréquences. Plus précisément, les moyens de détection selon l'invention comportent des moyens de réception comprenant une antenne 4 de réception radiofréquence reliée à un pilote d'antenne 5.Le pilote d'antenne comporte des moyens de contrôle automatique de gain (non représentés) permettant, comme il est connu, de régler la sensibilité des moyens de réception, c'est-à-dire le gain de réception en fonction de l'amplitude des signaux reçus. Ces moyens de contrôle automatique de gain génèrent un signal de détection -de signaux considérés comme perturbateurs dès lors que le gain du récepteur descend en dessous d'un seuil prédéterminé, preuve que dans ce cas, le récepteur a diminué sa sensibilité en raison de présence de bruit. Ce signal de détection est délivré à un organe de contrôle, par exemple un microcontrôleur, lequel va commander la mise sous tension des moyens d'alerte, constitués dans l'exemple représenté par une diode électroluminescente.

Une deuxième façon de détecter les signaux radiofréquences perturbateurs consiste à considérer que de tels signaux vont générer, en sortie de l'étage de réception radiofréquence et après numérisation, un nombre de fronts montants sur une fenêtre temporelle prédéterminée supérieur au nombre de fronts montants qui serait comptabilisé dans le cas de la réception d'un signal utile. Un deuxième mode de réalisation selon l'invention consiste donc à prévoir, comme schématisé sur la figure 3, un module de traitement de signal 8 à la sortie du pilote 5 d'antenne 7, contrôle également par le microcontrôleur 7, et chargé de comptabiliser le nombre de fronts montants reçus sur une fenêtre temporelle donnée, et de délivrer un signal de détection d'un signal perturbateur si ce nombre est supérieur à une valeur seuil prédéterminée. Comme précédemment, en cas de détection de signaux perturbateurs, le microcontrôleur commande la mise sous tension de la diode électroluminescente en vue d'avertir l'utilisateur.

Il est clair que dans l'implémentation des différents moyens constitutifs de l'invention, on cherchera de préférence à optimiser le nombre de composants utilisés. Ainsi, dans un mode de réalisation préférentiel, l'antenne 4, et par voie de conséquence le pilote 5 de l'antenne et le microcontrôleur chargé de contrôler le fonctionnement de ce pilote seront communs aux moyens de réception radiofréquences déjà utilisés pour le système de commande.

Plus précisément, que le système de commande soit un système de télécommande ou de type mains-libres, l'équipement 1 situé à bord du véhicule V est obligatoirement doté d'une antenne de réception radiofréquence qui peut également et avantageusement être utilisé pour la détection des signaux radiofréquences perturbateurs. Dans ce cas, les moyens de détection et les moyens d'alerte selon l'invention sont localisés au niveau du véhicule V, et les moyens de détection sont intégrés, au moins partiellement, à l'équipement 1.

En variante, si le système de commande est un système de type mains-libres dans lequel la communication depuis l'équipement 1 vers l'identifiant 2 s'effectue également par signaux radiofréquences, alors l'identifiant doit obligatoirement être doté d'une antenne de réception radiofréquence. Dans ce-cas, on-peut-prévoir que les moyens de détection de signaux perturbateurs, ainsi que les moyens d'alerte soient situés au niveau de l'identifiant, une même antenne étant utilisée pour la détection de signaux radiofréquences, perturbateurs ou utiles.

Bien entendu, tout autre type d'architecture, prévoyant notamment d'utiliser des composants distincts et supplémentaires par rapport à ceux nécessaires au fonctionnement classique d'un système de commande, entre dans le cadre de la présente invention.

Un autre aspect de l'invention consiste à déterminer le moment optimum pour faire fonctionner les moyens de détection des signaux perturbateurs en vue d'une éventuelle alerte à l'utilisateur. Selon un mode de réalisation préférentiel de l'invention, on considère que le meilleur moment pour alerter l'utilisateur est celui où l'utilisateur vient de se garer et arrête le moteur de son véhicule. En effet, dans ce cas, l'utilisateur est encore dans son véhicule, et les seules actions ultérieures qu'il est susceptible de faire sont, en fonction des capacités de son système de commande :
- soit de redémarrer son véhicule ;
- soit de sortir de son véhicule et télécommander ou provoquer par son éloignement la condamnation automatique des ouvrants, puis revenir vers son véhicule pour l'ouvrir à nouveau.

En alertant à ce moment-là l'utilisateur de la présence de signaux perturbateurs vis-à-vis de son système de commande, on permet à ce dernier d'utiliser la solution de secours prévue pour le démarrage ou la condamnation ou la décondamnation tout en évitant qu'il ait l'impression que son système de commande est en panne.

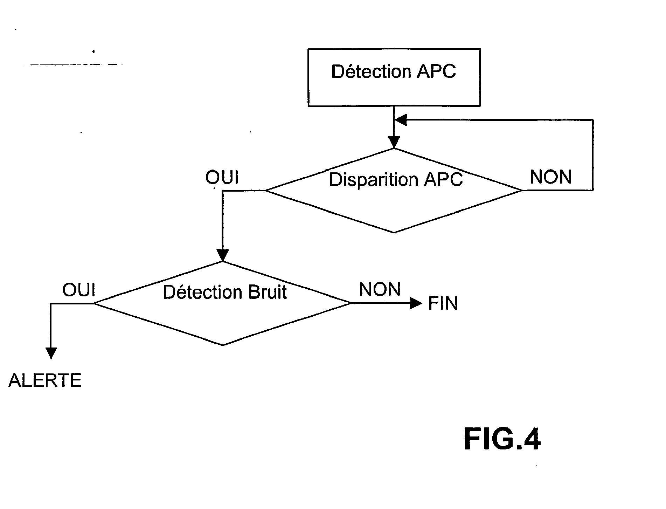

En conséquence, selon un mode possible de fonctionnement, les moyens de détection de signaux radiofréquences perturbateurs sont déclenchés suite à la réception d'une indication que le véhicule automobile (V) est passé d'un état de fonctionnement à un état d'arrêt. Un signal connu généralement présent au niveau du véhicule automobile et utilisé à d'autres fins, éventuellement par d'autres dispositifs équipant le véhicule, est le signal dit « APC » existant après la mise sous contact du véhicule automobile. Un tel signal peut être utilisé pour le déclenchement des moyens de détection. Plus précisément, et comme schématisé sur la figure 4, une fois que le signal APC a été détecté, et tant que la disparition de ce signal n'a pas été constatée, les moyens de détection de signaux perturbateurs ne sont pas mis en fonctionnement. En revanche, dès que la disparition du signal APC est détectée, les moyens de détection de signaux perturbateurs sont déclenchés. Si aucun signal perturbateur n'est détecté, rien ne se passe et l'utilisateur pourra normalement utiliser son système de commande. Si au contraire un signal de bruit est détecté, on génère une alerte à destination de l'utilisateur. Ce dernier sait alors qu'il lui faudra utiliser la solution de secours pour condamner les ouvrants de son véhicule, les décondamner à son retour, et éventuellement autoriser un démarrage ultérieur.

En variante ou en combinaison, on peut prévoir que les moyens de détection sont déclenchés suite à une indication, disponible par ailleurs, qu'un ouvrant 3 a été ouvert puis fermé. Dans ce cas, on peut se trouver dans une situation où l'utilisateur vient de rentrer dans son véhicule et va vouloir le démarrer, ou bien dans une situation dans laquelle l'utilisateur vient de sortir de son véhicule et va vouloir le condamner, puis le décondamner à un moment ultérieur. Cette alternative peut notamment être préférable lorsque les moyens de détection et les moyens d'alerte sont au niveau de l'identifiant. En effet, les moyens de détection ne sont alors mis en fonctionnement qu'à des moments où l'on est quasiment sûr que l'utilisateur va être amené à utiliser son système de commande. Cependant, il faut prévoir que dans ce cas, un message particulier soit émis depuis le véhicule vers l'identifiant pour lui donner l'ordre de commander les moyens de détection de signaux de perturbation.

Il est bien entendu possible d'avoir, notamment au niveau du véhicule, de nombreuses architectures possibles pour implémenter l'invention. En particulier, on doit comprendre que les différents éléments constitutifs de l'invention et disposés au niveau du véhicule ne sont pas forcément tous situés au niveau d'un même équipement ou module mais qu'il peut être prévu de répartir ces différents éléments dans différents modules, dédiés par ailleurs à d'autres fonctions, et communicant et interagissant entre eux.

## Revendications

1. Système de commande de l'accès et/ou du démarrage d'un véhicule automobile (V) du type comportant un dispositif portatif (2) adapté pour communiquer avec un équipement (1) situé au niveau du véhicule automobile (V) par des signaux radiofréquences en vue d'autoriser ou empêcher l'accès et/ou le démarrage, le véhicule automobile (V) étant en outre-muni d'un moyen de secours pour-autoriser ou empêcher l'accès et/ou le démarrage à la place dudit système de commande, le système étant **caractérise en ce qu'**il comporte en outre des moyens (4-6 ; 4-6, 8) de détection de signaux radiofréquences perturbateurs émis indépendamment du système de commande, ainsi que des moyens (7) d'alerte de l'utilisateur commandés après détection des signaux radiofréquences perturbateurs de manière à indiquer à l'utilisateur qu'il doit utiliser le moyen de secours du véhicule automobile pour autoriser ou empêcher l'accès et/ou le démarrage.

2. Système de commande selon la revendication 1, **caractérisé en ce que** les moyens d'alerte permettent la génération d'un signal visuel, tel qu'un signal lumineux d'une diode électroluminescente (7), ou l'affichage d'un message sur un écran à cristaux liquides.

3. Système de commande selon la revendication 1, **caractérisé en ce que** les moyens d'alerte sont sonores.

4. Système de commande selon l'une quelconque des revendications précédentes, **caractérisé en ce que** les moyens (4-6 ; 4-6, 8) de détection de signaux radiofréquences perturbateurs sont déclenchés suite à la réception d'une indication que le véhicule automobile (V) est passé d'un état de fonctionnement à un état d'arrêt.

5. Système de commande selon la revendication 4, **caractérisé en ce que** ladite indication consiste en la mesure d'un signal de mise sous contact (APC).

6. Système de commande selon l'une quelconque des revendications 1 à 3, **caractérisé en ce que** ladite indication consiste en la détection qu'un ouvrant (3) a été ouvert puis fermé.

7. Système de commande selon l'une quelconque des revendications précédentes, **caractérisé en ce que** les moyens de détection de signaux radiofréquences perturbateurs comportent des moyens de réception comprenant une antenne (4) de réception radiofréquence reliée à un pilote (5) d'antenne, ledit pilote d'antenne comportant en outre des moyens de contrôle automatique de gain permettant de régler la sensibilité des moyens de réception, et délivrant un signal de détection de signaux perturbateurs lorsque le gain descend au-dessous d'un certain seuil prédéterminé.

8. Système de commande selon l'une quelconque des revendications 1 à 6, **caractérisé en ce que** les moyens de détection de signaux radiofréquences perturbateurs comportent des moyens de réception comprenant une antenne (4) de réception radiofréquence reliée à un pilote d'antenne (5), et un module (8) de traitement de signal comptant le nombre de fronts montant reçus- sur une fenêtre temporelle donnée, et délivrant un signal de détection de signaux perturbateurs lorsque le nombre compté est supérieur à un nombre seuil prédéterminé.

9. Système de commande selon l'une quelconque des revendications précédentes, **caractérisé en ce que** le dispositif portatif (2) est une télécommande générant, sur action de l'utilisateur, lesdits signaux radiofréquences, et **en ce que** l'équipement (1) situé au niveau du véhicule automobile (V) comprend une antenne de réception radiofréquence.

10. Système de commande selon les revendications 7 et 9 ou 8 et 9 prises en combinaison, **caractérisé en ce que** l'antenne de réception radiofréquence de l'équipement (1) est commune avec l'antenne (4) de réception des signaux radiofréquences perturbateurs.

11. Système de commande selon l'une des revendications 9 ou 10, **caractérisé en ce que** les moyens (7) d'alerte sont localisés au niveau du véhicule automobile (V).

12. Système de commande selon l'une quelconque des revendications 1 à 8, **caractérisé en ce que** le dispositif portatif (2) est un identifiant générant, sur réception d'un signal d'interrogation émis par l'équipement (1), au moins un signal de réponse radiofréquence contenant un code d'identification, l'accès au véhicule automobile et/ou le démarrage du véhicule automobile n'étant autorisé que si le code d'identification a été au préalable identifié.

13. Système de commande selon les revendications 7 et 12 ou 8 et 12 prises en combinaison, **caractérisé en ce que**, le signal d'interrogation émis par l'équipement étant également un signal radiofréquence, l'identifiant portatif comporte une antenne de réception radiofréquence qui est commune avec l'antenne (4) de réception des signaux radiofréquences perturbateurs, et **en ce que** les moyens d'alerte sont disposés sur l'identifiant.

14. Système de commande selon l'une quelconque des revendications précédentes, **caractérisé en ce que** les signaux radiofréquences sont émis à une fréquence de l'ordre de 433 MHz.

## Claims

1. System for controlling the access and/or starting of a motor vehicle (V) of the type comprising a portable device (2) adapted for communicating with an item of equipment (1) situated on the motor vehicle (V) by radiofrequency signals for the purpose of authorizing or preventing access and/or starting, the motor vehicle (V) also being furnished with a backup means for authorizing or preventing access and/or starting instead of the said control system, the system being **characterized in that** it also comprises means (4-6; 4-6, 8) for detecting interfering radiofrequency signals transmitted independently of the control system, and user-warning means (7) controlled after detection of the interfering radiofrequency signals in order to indicate to the user that he must use the backup means of the motor vehicle in order to authorize or prevent access and/or starting.

2. Control system according to Claim 1, **characterized in that** the warning means allow the generation of a visual signal, such as a light signal of a light-emitting diode (7), or the display of a message on a liquid crystal display.

3. Control system according to Claim 1, **characterized in that** the warning means are audible.

4. Control system according to any one of the preceding claims, **characterized in that** the means (4-6; 4-6, 8) for detecting interfering radiofrequency signals are initiated following the receipt of an indication that the motor vehicle (V) has switched from an operating state to a stopped state.

5. Control system according to Claim 4, **characterized in that** the said indication consists in the measurement of an ignition contact signal (APC).

6. Control system according to any one of Claims 1 to 3, **characterized in that** the said indication consists in the detection that an opening (3) has been opened and then closed.

7. Control system according to any one of the preceding claims, **characterized in that** the means for detecting interfering radiofrequency signals comprise reception means comprising a radiofrequency receiving antenna (4) connected to an antenna driver (5), the said antenna driver also comprising automatic gain control means making it possible to adjust the sensitivity of the receiving means, and delivering an interfering-signal detection signal when the gain falls below a certain predetermined threshold.

8. Control system according to any one of Claims 1 to 6, **characterized in that** the means for detecting interfering radiofrequency signals comprise receiving means comprising a radiofrequency receiving antenna (4) connected to an antenna driver (5), and a signalprocessing module (8) counting the number of rising edges received over a given time window, and delivering an interfering-signal detection signal when the number counted is greater than a predetermined threshold number.

9. Control system according to any one of the preceding claims, **characterized in that** the portable device (2) is a remote control generating, on the action of the user, the said radiofrequency signals, and **in that** the item of equipment (1) situated on the motor vehicle (V) comprises a radiofrequency receiving antenna.

10. Control system according to Claims 7 and 9 or 8 and 9 taken in combination, **characterized in that** the radiofrequency receiving antenna of the item of equipment (1) is common with the antenna (4) for receiving interfering radiofrequency signals.

11. Control system according to one of Claims 9 or 10, **characterized in that** the warning means (7) are located on the motor vehicle (V).

12. Control system according to any one of Claims 1 to 8, **characterized in that** the portable device (2) is an identifier generating, on receipt of an interrogation signal transmitted by the item of equipment (1), at least one radiofrequency response signal containing an identification code, access to the motor vehicle and/or starting of the motor vehicle not being authorized unless the identification code has first been identified.

13. Control system according to Claims 7 and 12 or 8 and 12 taken in combination, **characterized in that**, since the interrogation signal transmitted by the item of equipment is also a radiofrequency signal, the portable identifier comprises a radiofrequency receiving antenna which is common with the antenna (4) for receiving interfering radiofrequency signals, and **in that** the warning means are placed on the identifier.

14. Control system according to any one of the preceding claims, **characterized in that** the radiofrequency signals are transmitted at a frequency of the order of 433MHz.

## Patentansprüche

1. System zur Steuerung des Zugangs zu einem und/oder des Starts eines Kraftfahrzeugs (V) vom Typ mit einer tragbaren Vorrichtung (2), die geeignet ist, um über Funkfrequenzsignale mit einem Gerät (1) zu kommunizieren, das sich im Bereich des Kraftfahrzeugs (V) befindet, um den Zugang und/oder den Start zu erlauben oder zu verhindern, wobei das Kraftfahrzeug (V) außerdem mit einer Noteinrichtung ausgestattet ist, um den Zugang und/oder den Start anstelle des Steuersystems zu erlauben oder zu verhindern, wobei das System **dadurch gekennzeichnet ist, dass** es außerdem Einrichtungen (4-6; 4-6, 8) zur Erfassung von störenden Funkfrequenzsignalen, die unabhängig vom Steuersystem gesendet werden, sowie Einrichtungen (7) zur Warnung des Benutzers aufweist, die nach der Erfassung der störenden Funkfrequenzsignale gesteuert werden, um dem Benutzer mitzuteilen, dass er die Noteinrichtung des Kraftfahrzeugs benutzen muss, um den Zugang und/oder den Start zu erlauben oder zu verhindern.

2. Steuersystem nach Anspruch 1, **dadurch gekennzeichnet, dass** die Warneinrichtungen die Erzeugung eines visuellen Signals wie eines Lichtsignals einer Elektrolumineszenzdiode (7) oder die Anzeige einer Nachricht auf einem Flüssigkristallbildschirm erlauben.

3. Steuersystem nach Anspruch 1, **dadurch gekennzeichnet, dass** die Warneinrichtungen akustische Einrichtungen sind.

4. Steuersystem nach einem der vorhergehenden Ansprüche, **dadurch gekennzeichnet, dass** die Einrichtungen (4-6; 4-6, 8) zur Erfassung von störenden Funkfrequenzsignalen nach dem Empfang einer Angabe ausgelöst werden, dass das Kraftfahrzeug (V) von einem Betriebszustand in einen Stillstandszustand übergegangen ist.

5. Steuersystem nach Anspruch 4, **dadurch gekennzeichnet, dass** die Angabe aus dem Messwert eines Einschaltsignals (APC) besteht.

6. Steuersystem nach einem der Ansprüche 1 bis 3, **dadurch gekennzeichnet, dass** die Angabe aus der Erkennung besteht, dass eine Tür (3) geöffnet und dann geschlossen wurde.

7. Steuersystem nach einem der vorhergehenden Ansprüche, **dadurch gekennzeichnet, dass** die Einrichtungen zur Erfassung von störenden Funkfrequenzsignalen Empfangseinrichtungen aufweisen, die eine Funkfrequenz-Empfangsantenne (4) enthalten, die mit einem Antennentreiber (5) verbunden ist, wobei der Antennentreiber außerdem Einrichtungen zur automatischen Verstärkungssteuerung aufweist, die es ermöglichen, die Empfindlichkeit der Empfangseinrichtungen zu regeln, und ein Erfassungssignal von Störsignalen liefert, wenn die Verstärkung unter einen vorbestimmten Schwellwert sinkt.

8. Steuersystem nach einem der Ansprüche 1 bis 6, **dadurch gekennzeichnet, dass** die Einrichtungen zur Erfassung von störenden Funkfrequenzsignalen Empfangseinrichtungen aufweisen, die eine Funkfrequenz-Empfangsantenne (4), die mit einem Antennentreiber (5) verbunden ist, und ein Signalverarbeitungsmodul (8) enthalten, das die Anzahl von ansteigenden Flanken zählt, die in einem gegebenen Zeitfenster empfangen werden, und ein Signal der Erfassung von Störsignalen liefert, wenn die gezählte Anzahl höher als eine vorbestimmte Schwellenzahl ist.

9. Steuersystem nach einem der vorhergehenden Ansprüche, **dadurch gekennzeichnet, dass** die tragbare Vorrichtung (2) eine Fernbedienung ist, die auf eine Einwirkung des Benutzers hin die Funkfrequenzsignale erzeugt, und dass das im Bereich des Kraftfahrzeugs (V) befindliche Gerät (1) eine Funkfrequenz-Empfangsantenne enthält.

10. Steuersystem nach den Ansprüchen 7 und 9 oder 8 und 9 in Kombination, **dadurch gekennzeichnet, dass** die Funkfrequenz-Empfangsantenne des Geräts (1) mit der Empfangsantenne (4) der störenden Funkfrequenzsignale gemeinsam ist.

11. Steuersystem nach einem der Ansprüche 9 oder 10, **dadurch gekennzeichnet, dass** die Warneinrichtungen (7) sich im Bereich des Kraftfahrzeugs (V) befinden.

12. Steuersystem nach einem der Ansprüche 1 bis 8, **dadurch gekennzeichnet, dass** die tragbare Vorrichtung (2) ein Identifizierer ist, der bei Empfang eines vom Gerät (1) gesendeten Abfragesignals mindestens ein Funkfrequenz-Antwortsignal erzeugt, das einen Identifikationscode enthält, wobei der Zugang zum Kraftfahrzeug und/oder der Start des Kraftfahrzeugs nur erlaubt werden, wenn der Identifikationscode vorher identifiziert wurde.

13. Steuersystem nach den Ansprüchen 7 und 12 oder 8 und 12 in Kombination, **dadurch gekennzeichnet, dass**, da das vom Gerät gesendet Abfragesignal ebenfalls ein Funkfrequenzsignal ist, der tragbare Identifizierer eine Funkfrequenz-Empfangsantenne aufweist, die mit der Empfangsantenne (4) der störenden Funkfrequenzsignale gemeinsam ist, und dass die Warneinrichtungen auf dem Identifizierer angeordnet sind.

14. Steuersystem nach einem der vorhergehenden Ansprüche, **dadurch gekennzeichnet, dass** die Funkfrequenzsignale auf einer Frequenz in der Größenordnung von 433 MHz gesendet werden.
